# EUROPEAN PATENT SPECIFICATION

(11) **EP 1 462 321 B1**
(45) Date of publication and mention of the grant of the patent: **07.01.2009**
(21) Application number: 04006658.1
(22) Date of filing: 19.03.2004
(51) Int. Cl.: B60R 21/16

(54) **Side curtain airbag**
Seitenairbag
Sac gonfable de rideau latéral

(30) Priority: 24.03.2003 US 457425 P
(43) Date of publication of application: 29.09.2004
(73) Proprietor: KEY SAFETY SYSTEMS, INC., Sterling Heights, MI 48314 (US)
(72) Inventor: Salmo, Shakir M., Sterling Heights MI 4830 (US); Wipasuramonton, Pongdet Paul, Rochester Michigan 48307 (US); Olson, Mark O., Farmington Hills Michigan 48331 (US); Jakovski, Jovica John, Warren Michigan 48088 (US); Walczak, Charles S. E., Warren Michigan 48089 (US)
(74) Representative: Gislon, Gabriele

(56) References cited:
- EP-A- 1 364 839
- EP-A- 1 418 096
- EP-A2- 1 228 930
- WO-A-01/45988
- DE-U- 20 105 734
- DE-U- 20 216 339
- GB-A- 2 314 300
- US-B1- 6 450 529
- PATENT ABSTRACTS OF JAPAN vol. 1999, no. 09, 30 July 1999 (1999-07-30) -& JP 11 115667 A (TOYOTA MOTOR CORP), 27 April 1999 (1999-04-27)

## Description

The present invention relates to a side impact airbag and more particularly to a side curtain airbag.

EP-A-1228930 discloses a side curtain airbag comprising an air bag main body adapted to deploy when an inflating gas is allowed to flow therein and an inner tube disposed along an upper edge of the airbag main body for guiding said inflating gas from the inflator into the air bag main body. A plurality of joining portions are provided for partiting the inside of the respective gas-flowable portions into a plurality of inflating portions. These partition joining portions make the thickness of the gas-flowable portions substantially equal and exert tensions in the longitudinal direction so that the air bag main body do not swing largely towards the inside or outside of the vehicle. The inner tube is formed into a cylinder and presents a plurality of supply ports for supplying the inflating gas into the respective inflating portions.

The side curtain airbag, according to the present invention, is typically located inside a vehicle headliner.

At the onset of a side collision or a vehicle rollover, the side curtain airbag is deployed along the side of the vehicle to cushion a vehicle occupant's head and upper torso.

The present invention as set forth in claim 1 and the claims depending therefrom provides a new and useful configuration for a side curtain airbag and particularly a new and useful structure for controlling the flow of gas in a side curtain airbag. In addition, the side curtain airbag assembly of the present invention is designed in a manner believed to provide a cost-effective way of producing the side curtain airbag assembly.
Figure 1 is a schematic side view of one type of side curtain airbag according to the principles of the present invention.
Figure 2 is a fragmentary view, with portions cut away, of part of a side curtain airbag assembly similar to the type shown in Figure 1, and showing part of an inflatable bladder.
Figure 3 is another fragmentary view, with portions cut away, of a side curtain airbag assembly similar to the type shown in Figure 1, and showing another view of an inflatable bladder of a side curtain airbag.
Figure 4 is an illustration of a segment of material forming a reaction surface for a side curtain airbag of the type shown in Figures 1-4.
Figure 5 is an illustration of a segment of material that can be used to form a 3D tether in a side curtain airbag of the type shown in Figures 1-4.
Figure 6 is a fragmentary view of a side curtain airbag assembly of the type shown in Figure 1, particularly showing the gas source connected to the side curtain airbag.
Figure 7 is a perspective view of the structure forming a gas manifold and nozzle device for a side curtain airbag.
Figure 8 is a fragmentary, schematic cross section of a portion of an inlet gas conduit for a side curtain airbag.
Figure 9 schematically illustrates one alternative structure for redirecting and diffusing gas in a side curtain airbag.
Figures 10A-10C illustrate the manner in which the structure of Figure 9 for redirecting and diffusing gas can be constructed.
Figure 11 schematically illustrates another structure for redirecting and diffusing gas in a side curtain airbag.
Figures 12A and 12B illustrate the manner in which the structure of Figure 11 for redirecting and diffusing gas can be constructed.
Figures 13A-13C illustrate another structure for redirecting and diffusing gas in a side curtain airbag.
Figure 14 schematically illustrates another type of side curtain airbag which is not part of the invention.
Figure 15 schematically illustrates an alternative structure for redirecting and diffusing gas for the type of side curtain airbag of Figure 14 which is not part of the invention.

The present invention relates to a side curtain airbag with a structure for redirecting, diffusing and distributing gas directed into the side curtain airbag. The principles of the present invention are described below in connection with two types of side curtain airbags, each of which includes a mid-mount gas source for a side curtain airbag. The term "mid-mount" is not intended to define a precise location for the gas source, but rather is used in the sense that gas from such a source is directed toward both the front and the rear ends of the inflatable cushion. Gas from a mid-mount gas source is redirected, diffused and distributed, to inflate the inflatable sections of the side curtain airbag in a predetermined manner. However, the principles of the present invention can be applied to other types of side curtain airbags designed for use with mid-mount gas sources.

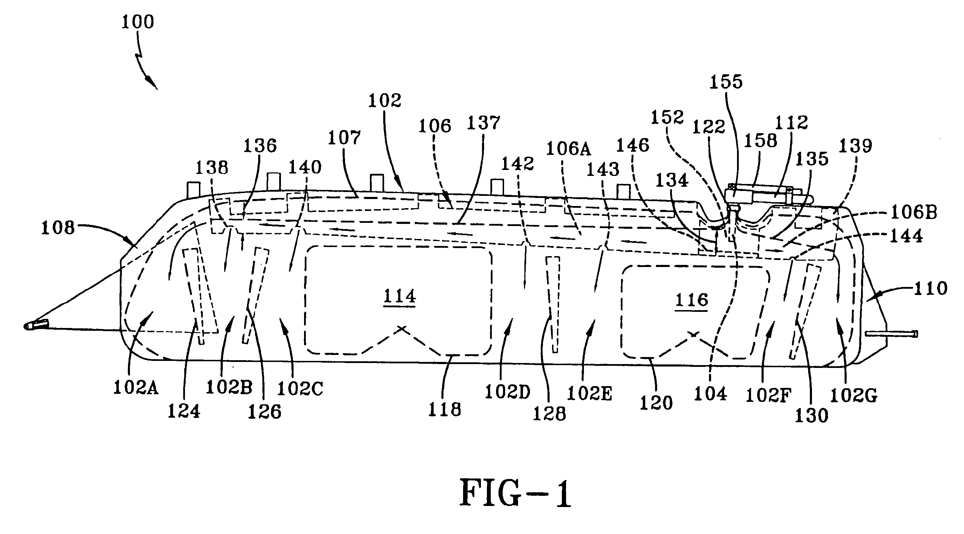

Figure 1 is a side view of one type of side curtain airbag assembly 100 with a side curtain airbag that is configured to distribute gas according to the principles of the present invention. The side curtain airbag includes an inflatable cushion 102 that is elongated in shape and receives gas through a mid-mount located gas inlet conduit 104. In a vehicle airbag assembly, the gas is generally an inert gas. The inflatable cushion 102 includes a plurality of inflatable sections 102A-G, which are described in more detail below. A bladder 106 is located within the inflatable cushion below a top perimeter seam 107 of the inflatable cushion 102. The bladder 106 is configured to redirect, diffuse and distribute gas from the gas inlet conduit to the inflatable cushion sections 102A-G.

This type of side curtain airbag is mounted to the roof rail of a vehicle and spans the distance between at least two pillars of the vehicle. The front and rear sides 108, 110, respectively, of the inflatable cushion 102, are sized to extend between the A-pillar and the C or D-pillar of the vehicle. The gas inlet conduit 104 receives gas from a gas source 112 (preferably a gas generator) and directs the gas into the bladder 106. The bladder 106 redirects, diffuses and distributes the gas to the inflatable sections 102A-102G of the inflatable cushion 102.

The inflatable cushion 102 can be formed in a number of ways including being woven or knitted as an integral unit, e.g. by a Jacquard loom or by sewing one or more panels of fabric together. The inflatable cushion 102 is preferably formed from silicon, urethane or neoprene coated, woven airbag fabric. The inflatable cushion 102 includes inflatable sections 102A-G, and uninflated regions 114, 116, which are sometimes referred to as inactive zones. If the inflatable cushion 102 is formed by sewing one or more panels together, peripheral seams 118, 120, which are sewn seams, bind the uninflated regions 114, 116, respectively. If the inflatable cushion 102 is formed by ultra-sonic bonding one or more panels together, the peripheral seams 118, 120 that bound the uninflated regions 114, 116, respectively, are bonded or joined seams. If the inflatable cushion is woven, the inflatable cushion includes opposed panel-like portions, and the peripheral seams 118, 120 that bound the uninflated regions 114, 116, are formed by inter-weaving the weft and warp fibers that form the opposed panel-like portions.

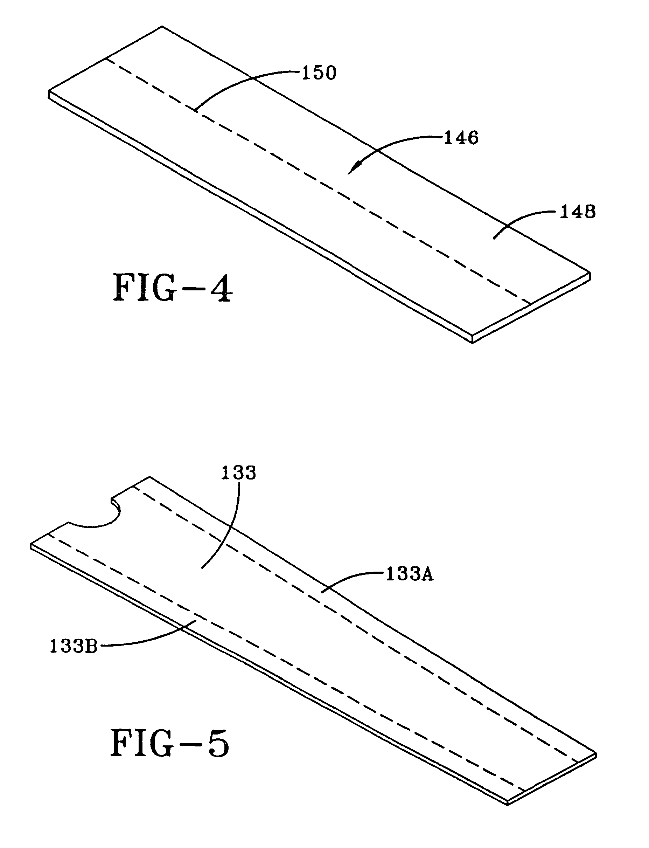

Certain of the inflatable sections 102A-G are also bounded by internal tethers 124, 126, 128, and 130. The tethers can be formed, e.g. by narrow sewn or bonded lines or seams, or by narrowed woven regions of the fabric, which form the opposed panel like portions of the inflatable cushion. For example, some or all of the panels, or the panel-like portions) can be joined directly to each other (which is generally referred to as a 2D tether) or joined to each other via a fabric segment (referred to as a 3D tether) to separate the inflatable cushion into several of the inflatable sections 102A-G. Figure 5 illustrates a segment of flexible airbag fabric 133 that can be used to form a 3D tether. The segment of fabric has border portions 133A, 133B that are joined to respective panels of the inflatable cushion 102. A primary purpose of the 3D tether is to permit the respective panels of the inflatable cushion to become sufficiently separated from one another during inflation. An additional purpose of a 3D tether is to also control the volume of the inflatable cushion. In the illustrated embodiment of Figure 1, the tethers 124, 126, 128, and130 are all 3D tethers. Thus, the interior volume of the inflatable cushion 102 is separated into inflatable sections 102A-G. The locations and pattern of the inflatable sections, the tethers, and the inactive zones are designed to provide (a) maximum cushioning at the most strategic locations to cushion a vehicle occupant's head during a side impact or rollover, (b) less cushioning at less strategic locations (e.g. the 2D and 3D tether locations) and (c) even less cushioning in the inactive zones. The overall configuration of the inflatable cushion 102 is provides priority of cushioning effect at the locations where it can do the most good, and in a manner by which such cushioning effect can be provided within an acceptable time frame from the onset of a collision or rollover.

The bladder 106 is formed of flexible material (e.g. silicon coated airbag fabric) and includes tapering sections 106A, 106B extending in opposite directions away from the gas inlet conduit 104, and transverse to the gas inlet conduit 104. In Figure 1, the tapering section 106A is relatively long, in comparison to the tapering section 106B. Each tapering section can comprise a panel of the airbag fabric that is folded into the configuration of the tapering section, or the tapering section can be integrally woven into the airbag fabric. Alternatively, as illustrated in Figures 1, 2 and 6, each tapering section 106A, 106B can be formed by a section of fabric that may have an original shape that is other than the final tapering shape, but which is formed into a tapering section with a predetermined tapering profile, by appropriate line of stitching in the section of fabric. In Figures 1, 2 and 6, the line of stitching 135 defines a boundary of the shorter tapering section 106B, and the line of stitching 137 defines a boundary of the longer tapering section 106A. The fabric forming the tapering sections 106A, 106B should be flexible enough to be folded when the airbag is being stored and inflated without tending to balloon.

Each of the tapering sections 106A, 106B has a relatively wide part 134 near the gas inlet conduit 104, and a narrower part 136 remote from the gas inlet conduit. The narrow ends of the tapering sections can be configured to form gas outlets for the bladder, if desired. Whether such gas outlets are provided depends on how much and how quickly gas needs to be directed into the inflatable sections 102A, 102G at the front and rear ends of the inflatable cushion.

Each of the tapering sections 106A, 106B of the bladder may include a plurality of vents positioned to communicate gas from the bladder to the inflatable sections of the inflatable cushion 102. In the embodiment of Figure 1, vents 138, 140, 142, 143 are formed in the tapering section 106A. An additional vent 144 is formed in the tapering section 106B. The desired speed and sequence with which the inflatable sections 102A-G are intended to be inflated (particularly the inflatable sections 102A and 102G at the ends of the inflatable cushion) determine whether the narrow ends of the tapering sections are formed with gas outlet passages. The vents in a tapering section of the bladder can be preformed in the fabric that is used to form the tapering section, or can be formed after the tapering section is sewn into the airbag. The positioning and diameter of each vent will depend on the size and location of the inflatable sections 102A-G of the inflatable cushion 102 and the manner in which the bladder is designed to distribute inflation gas to the inflatable sections of the inflatable cushion 102. The vents can be reinforced, by techniques known to those in the art, if necessary or desirable.

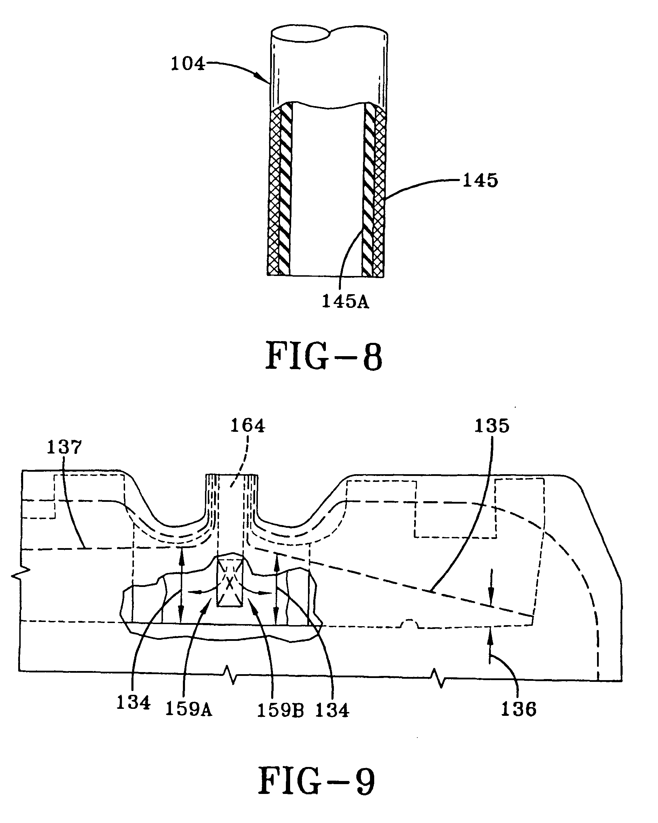

Referring to Figure 1, the gas inlet conduit 104 is located generally between the tapering sections 106A, 106B of the bladder. The tapering sections 106A, 106B extend in opposite directions from and transverse to the gas inlet conduit 104. As schematically illustrated in Figure 8, the gas inlet conduit 104 can be a thin-walled, flexible fabric or plastic tube 145. When formed of fabric, the gas inlet conduit can have a woven or braided exterior and an optional interior rubberized lining 145A.

The bladder 106 includes a reaction surface 146 in the path of gas directed from the gas inlet conduit 104 into the bladder. With some gas sources, the gas is relatively hot when it enters the gas inlet conduit 104. With other gas sources the gas is relatively cool. The gas inlet conduit can be reinforced, or provided with heat shielding, as needed or desirable, to withstand the heat and pressure of the gas. The reaction surface 146 is particularly useful with relatively hot gas for preventing the relatively hot gas from penetrating through the heat shield 152 (described below), the bladder 106 and ultimately the main panel(s) of the inflatable cushion, which would cause the gas to leak out of the inflatable cushion.

The reaction surface 146 redirects gas into the wide parts 134 of each of the tapering sections 106A, 106B of the bladder. The gas diffuses into and flows in opposite directions in the bladder (i.e. toward the front and rear ends 108, 110 of the inflatable cushion 102), so that gas is distributed along the inflatable cushion 102 by the tapering sections 106A, 106B of the bladder.

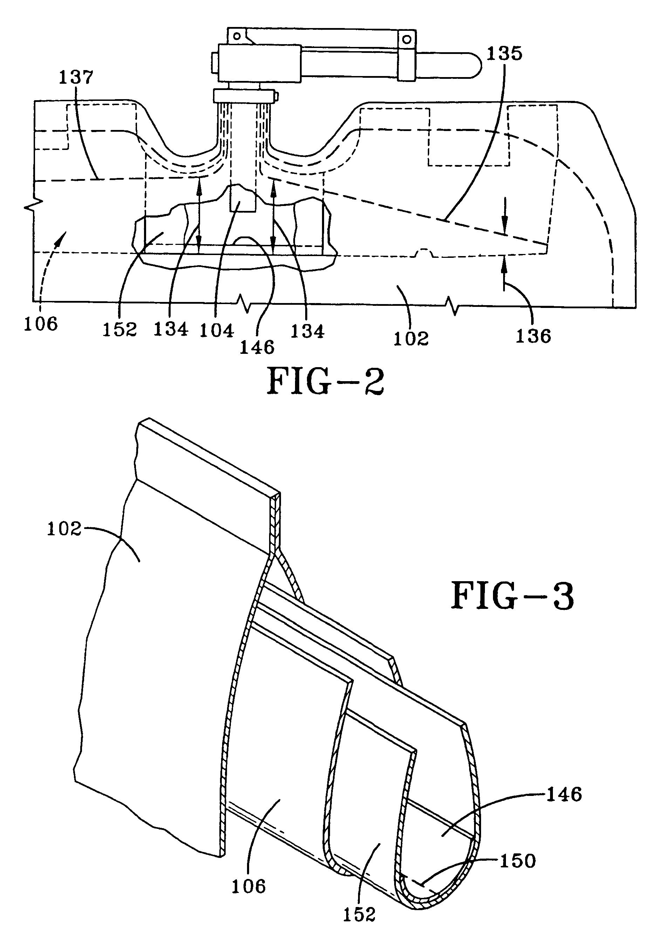

The reaction surface 146 of the bladder is preferably formed of a section of wide polyester webbing 148 that has a central fold line 150 (see Figure 4). When the reaction surface 146 is incorporated into the bladder, the central fold line 150 is common to (i.e. immediately adjacent to) fold lines of the bladder and the heat shield 152 (see Figure 3). The central fold line 150 is located directly in the path of gas directed through the gas inlet conduit 104, so that the reaction surface 146 rapidly redirects that gas to the wide portions 134 of the bladder. The volumes of the tapering sections 106A, 106B of the bladder are dimensioned to enable the redirected gas to be rapidly diffused and distributed along the inflatable cushion.

The heat shield 152, preferably formed by a segment of flexible material (e.g. silicon coated airbag fabric), is attached to the inside of the bladder, generally adjacent the gas inlet conduit 104, and has a fold line that is common to the central fold line 150 (see Figure 3). The heat shield 152 provides additional protection for the bladder at locations where the gas entering the bladder is generally the hottest. The heat shield 152 may not extend the full extent of the tapering sections 106A, 106B of the bladder, however, the heat shield can be extended to provide such coverage and protection along the entire length of the bladder, if necessary or desirable. Prior to sewing the bladder closed, the heat shield 152 and reaction surface 146 are positioned and aligned in the bladder with vents, if any, in the heat shield and reaction surface aligned with the vents in the bladder.

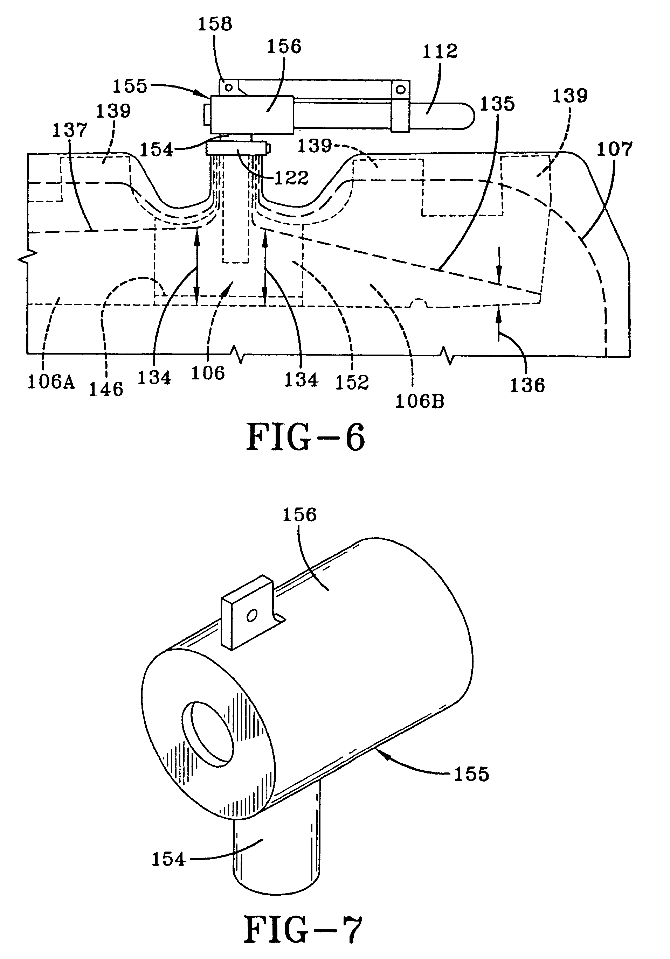

The gas inlet conduit 104 is also connected to a nozzle 154 forming part of a gas generator manifold 155 (see Figure 6). The gas generator manifold 155 also includes a cylindrical main body 156 that receives the gas outlet portion of the gas source 112. The cylindrical main body 156 directs the gas to the nozzle 154. The gas source 112 is secured to the gas generator manifold 155 in ways well known to those in the art. The gas generator manifold 155 and/or the gas source 112 may include a suitable mounting tab structure 158 for attachment to a vehicle proximate the C or D-pillar or to the roof rail of the vehicle. Suitable seals between the gas source and the cylindrical manifold main body 156 prevent leakage of gas from the gas generator manifold 155. All of the gas from the gas source 112 is confined in the cylindrical manifold main body 156, and is directed through the nozzle 154 and into the gas inlet conduit 104. Preferably, the cylindrical manifold main body 156 and the nozzle 154 are formed in one piece as a stamped, die cast, etc. metal member (formed e.g. from aluminum) or as machined parts that are welded together. Aluminum is a preferred material, but steel or plastic may also be used. In coupling the nozzle 154 to the gas inlet conduit 104, a clamp 122 (Figure 6) would be used to couple these parts together and seal the connection against gas leakage. Alternatively, the nozzle 154 can extend into the bladder to form the gas inlet conduit.

When inflation gas is directed into the gas inlet conduit 104 the gas initially inflates the portion of the bladder directly in the path of the gas. Since the reaction surface 146 is directly in the path of the inflation gas, the inflation gas is redirected by the reaction surface in opposite directions relative to the gas inlet conduit 104. The redirected gas diffuses into both tapering sections 106A, 106B of the bladder, thereby causing the rest of the tapering sections' bladder to inflate and to distribute the gas along the inflatable cushion 102. The vents 138, 140, 142, 143, and 144 (and the openings at the narrow ends of the tapering sections 106A, 106B, if such openings are provided) are located and configured to communicate the gas to the inflatable sections 102A-G of the inflatable cushion in a manner that causes the inflatable sections of the inflatable cushion to inflate in a predetermined sequence that is most appropriate for the particular inflatable cushion. For example, with a particular inflatable cushion configuration, it may be desirable that certain of the inflatable sections inflate, or begin to inflate, before other sections. The size and location of the vents (and the openings at the narrower ends of the tapered sections, if such openings are provided) are designed in accordance with the desired inflation sequence of the inflatable sections 102A-G, and with the diffusion and distribution characteristics of the bladder, so that the desired inflation sequence of the inflatable sections 102A-G is achieved.

In assembling a side curtain airbag according to the foregoing embodiments the bladder, inflatable cushion and gas inlet conduit are initially separately formed and then the bladder and gas inlet conduit are assembled into the inflatable cushion. The inflatable cushion is initially formed with peripheral seams that define the uninflated regions, and also with internal tethers. The bladder is separately formed by assembling the heat shield and reaction surface with the fabric of the bladder, and sewing the heat shield and reaction surface into the bladder as the bladder is being formed. The tapering sections of the bladder are formed by the line of stitching 135, 137 that defines the boundaries of the tapering sections. The bladder and inflatable cushion have top openings configured so that the bladder is inserted into the top opening in the inflatable cushion, and positioned so that its top opening is aligned with the top opening in the inflatable cushion. Tabs 139 at the border of the bladder are located so as to be captured by the perimeter seam 107 that closes up the inflatable cushion. When the perimeter seam 107 closes up the inflatable cushion the bladder is attached to the inflatable cushion, and the top opening in the bladder is inside the top opening in the inflatable cushion. The hose forming the gas inlet conduit 104 can be inserted through the top opening in the bladder and clamped to the nozzle of the gas generator manifold when the gas generator manifold is coupled to the inflatable cushion.

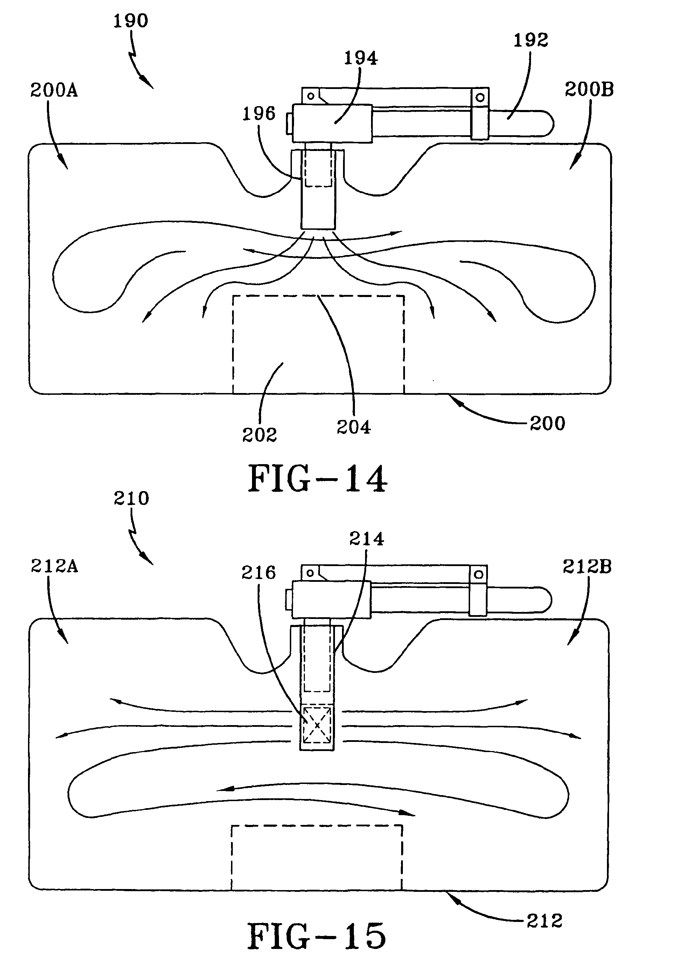

If the bladder 106 is woven into the inflatable cushion as the inflatable cushion is being formed, the seam that borders the uninflated region 116 may form the reaction surface, as described below in connection with Figure 14. The woven inflatable cushion and bladder will define a top opening through which a hose forming the gas inlet conduit can be inserted, when it is desired to couple the inflatable cushion to the gas generator manifold nozzle.

The side curtain airbag is folded, placed in a protective sack (which itself can be opened as the airbag begins to inflate) and installed at or near the roof rail of the vehicle. The gas source 112 is typically secured to the manifold 156, and the nozzle 154 is coupled to the gas inlet conduit 104 by a clamp 122 prior to assembly in the vehicle. The side curtain airbag with the inflator and the manifold comprise a side curtain airbag assembly 100.

Figures 9, 10A-10C, 11, 12A-12B and 13A-13C illustrate alternative structures for redirecting and diffusing gas in the bladder. In each of those structures, a transverse conduit is formed at the end of the gas inlet conduit, and redirects gas in opposite directions into the tapering portions of the bladder, where the gas is diffused and distributed by the bladder in the manner described above. Specifically, the transverse conduit is disposed in the path of the gas flowing into the bladder through the gas inlet conduit. The transverse conduit redirects the inflation gas in opposite directions into the tapering sections of the bladder, where it diffuses, and is distributed to the inflatable sections of the inflatable cushion 102.

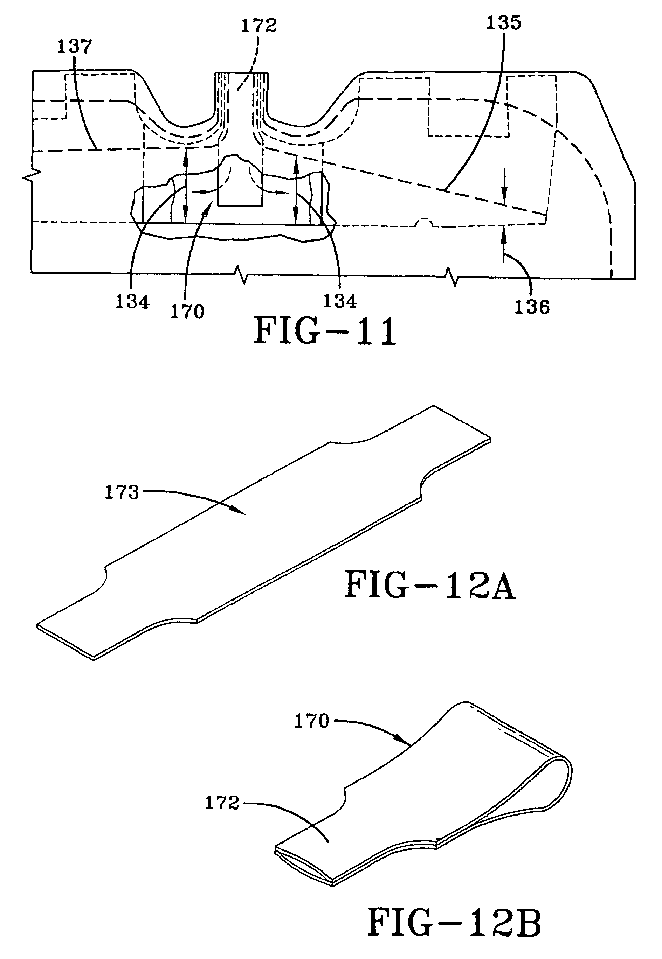

The embodiments of Figures 9, 10A-C and 13A-C have the bladder formed as one component of the airbag, and the structure forming the inlet and transverse conduit formed as a separate component that is incorporated into the airbag as a separate component. In the embodiment shown in Figures 11, 12A and 12B, the gas inlet conduit and the transverse conduit are integrally formed with and incorporated into the bladder.

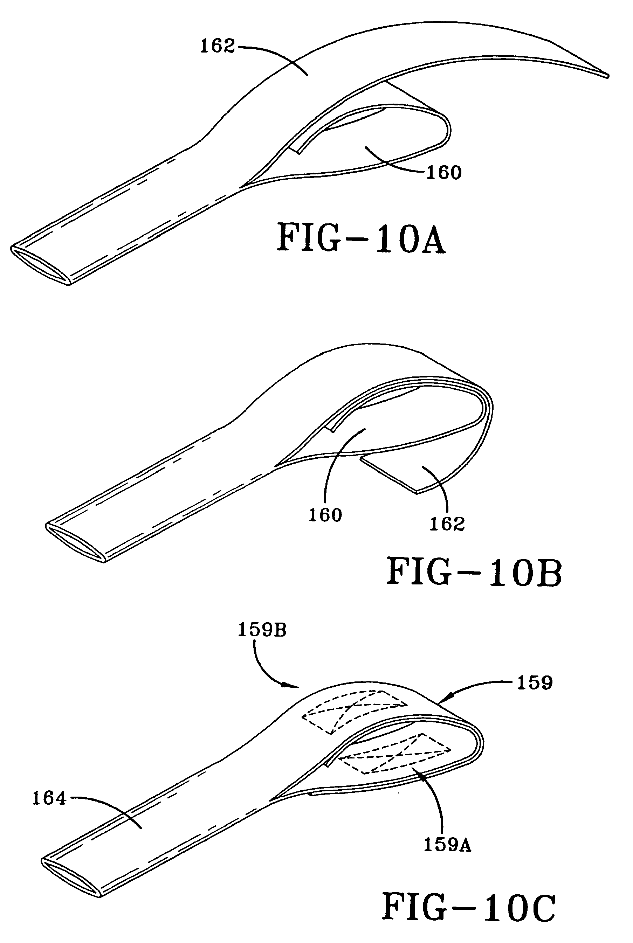

In Figures 9, 10A-10C the transverse conduit 159 is formed by a pair of integral sections 160, 162 of the flexible material that is at the inlet end of a segment of flexible hose that also forms the gas inlet conduit 164. The section 162 of flexible material is wrapped about the integral section 160 in the manner illustrated in Figures 10A-10C. The integral sections 162, 160 are sewn to each other to form the transverse conduit 159. Thus, the transverse and gas inlet conduit structure is formed as a component separate from the bladder. When the side curtain airbag is being assembled the structure of Figure 10C is located in the bladder, with the gas inlet conduit 164 positioned to be clamped to the manifold nozzle, so that gas is directed into the bladder through the gas inlet conduit 164.

In the embodiment of Figures 10A-10C, the transverse conduit 159 has gas outlets 159A, 159B at its opposite ends. The gas outlets 159A, 159B can be reinforced, if desired, before the sections of flexible material 160, 162 are formed into the transverse conduit 159. Forming the flexible material into the two sections 160, 162, and wrapping the sections of flexible material in the manner shown in Figures 10A-10C configures the transverse conduit to redirect gas into the tapering sections of the bladder. If rather than wrapping the section 162 about the section 160, the distal ends of the sections 160, 162 are placed adjacent to each other and then sewn together to form the sections 160, 162 into the transverse conduit, the transverse conduit is configured to redirect gas into the tapering sections of the bladder, but that configuration may not be quite as robust as the embodiment of Figures 10A-10C.

Figures 11, 12A, 12B illustrate another way of forming a transverse conduit 170 for directing gas in opposite directions in the bladder. In Figures 11,12A, 12B, a segment of a material 173, such as seat belt webbing, thin rubber sheet (e.g. EPDM), etc. is formed into the transverse conduit 170, and the remainder of the segment is then sewn into the bladder when the bladder is being sewn into its final configuration, so that the gas inlet conduit 172 and the transverse conduit are formed in the bladder as an integral part of the formation of the bladder. The embodiment of Figures 11,12A, 12B has the gas inlet conduit 172 sewn into position as the bladder is being formed.

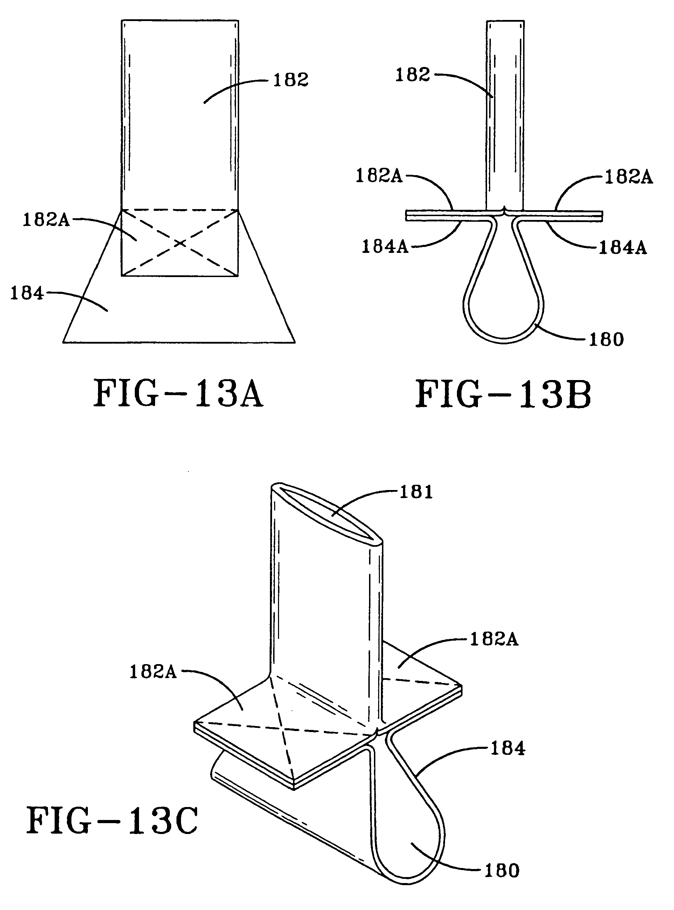

Figures 13A-13C illustrate still another way of forming a transverse conduit 180 at the end of a gas inlet conduit 181. In Figures 13A-13C a segment of flexible hose 182, and a segment of webbing (e.g. seat belt webbing) 184 are provided. The segment of flexible hose182 is formed into the gas inlet conduit 181 and has an end formed with a pair of flaps 182A. The segment of webbing 184 is formed into the transverse conduit 180, and has an end with a pair of flaps 184A. The segments 182, 184 are aligned so that their respective flaps 182A, 184A overlap. The flaps are then sewn together to couple and align the gas inlet conduit 181 with the transverse conduit 180. The transverse and gas inlet conduit structure is formed as a component separate from the bladder. When the side curtain airbag is being assembled, the structure of Figure 13C is located in the bladder, with the gas inlet conduit 181 positioned to be clamped to the manifold nozzle, so that gas is directed into the bladder by the gas inlet conduit 181. The transverse conduit 180 is positioned to redirect gas in opposite directions in the bladder.

Figure 14 shows another type of side curtain airbag assembly 190 not according to the present invention. In Figure 14 the side curtain airbag assembly 190 includes a gas source 192, manifold 194 and flexible gas inlet conduit 196 that are similar to Figure 1. An inflatable cushion 200 includes a pair of inflatable chambers 200A, 200B that are similar in size, and are disposed on opposite sides of the gas inlet conduit 196. An inactive zone 202 is provided between the pair of inflatable chambers 200A, 200B. In Figure14 there is no bladder for distributing the gas. The inlet gas is redirected by a section of the inflatable cushion disposed along the top seam 204 of the inactive zone, and diffuses into the pair of inflatable chambers 200A, 200B, in the manner schematically illustrated in Figure 14. If the pressure is greater in one of the inflatable chambers 200A, 200B the gas is redirected from that chamber into the other chamber in the manner illustrated, via an active channel that extends between the chambers 200A, 200B. The gas can flow back and forth between the inflatable chambers 200A, 200B until pressure is equalized in the chambers. If the gas is relatively cool no reaction surface may be required, and the portion of the inflatable cushion along the top seam 204 of the inactive zone is all that is required to redirect the gas. If the gas is relatively hot, a reaction surface, and possibly a heat shield, may be required to protect the portions of the inflatable cushion affected by the hot gas.

Figure 15 shows a side curtain airbag assembly 210, not according to the invention, that is similar to Figure 14, in the sense that there is no bladder, and an inflatable cushion 212 has a pair of similar size inflatable chambers 212A, 212B on the opposite sides of a gas inlet conduit 214. However, as schematically illustrated in Figure 15, the structure for redirecting the gas can be a transverse conduit 216 at the end of the gas inlet conduit 214. The transverse conduit 216 can be configured in the manner described and shown in connection with any of Figures 9-13. Otherwise the manner in which gas is redirected, diffused, and distributed to the pair of inflatable sections is generally similar to that described in connection with Figure 14. If the pressure is greater in one of the chambers 212A or 2128 the gas is redirected from that chamber into the other chamber in the manner illustrated, via an active channel that extends between the chambers 212A, 212B. Gas can flow back and forth between the chambers 212A, 212B until pressure is equalized in the chambers.

## Claims

1. A side curtain airbag assembly having an inflatable cushion (102) with a plurality of inflatable sections (102A-G) in a predetermined pattern; a flexible bladder (106) located within the inflatable cushion (102); a gas inlet conduit (104) attached to a nozzle (154) forming part of a gas generator manifold (155), the gas inlet conduit (104) configured to direct gas into the bladder (106), the bladder being configured to redirect, diffuse and distribute gas to the inflatable sections (102A-G) of the inflatable cushion (102) wherein the bladder (106) is provided with a plurality of vents (138, 140, 142, 143, 144) positioned to communicate gas from the bladder to the inflatable sections (102A-G) of the inflatable cushion (102), to inflate the inflatable sections of the inflatable cushion in a predetermined manner;
**characterized by** the bladder (106) having a pair of tapering sections (106A, 106B) with the nozzle (154) and gas inlet conduit (104) located between them, the tapering sections extending in opposite directions from and transverse to the nozzle (154) and gas inlet conduit (104), each of the tapering sections (106A, 106B) having a relatively wide part (134) located near the nozzle (154) and gas inlet conduit (104), and a narrower part (136) remote from the nozzle (154) and gas inlet conduit (104), the gas inlet conduit (104) being a flexible hose with the nozzle located inside a lumen of the hose, and sections (160, 162) of the hose or a member (184) attached to the hose forming a transverse conduit (159, 170, 180) located at an outlet end of the gas.inlet conduit (104) for redirecting gas from a gas inlet conduit in opposite directions in the tapering sections (106A, 106B) of the bladder (106)

2. A side curtain airbag assembly according to claim 1, wherein the bladder (106) includes: a reaction surface (146) for directing gas from the gas inlet conduit (104) in opposite directions in the bladder (106).

3. A side curtain airbag assembly according to claim 2, wherein the reaction surface (146) and the tapering sections (106A, 106B) of the bladder (106) have a common fold line (150).

4. A side curtain airbag assembly according to claim 3, wherein a heat shield (152) is provided in the bladder (106), the heat shield also having the common fold line (150).

## Patentansprüche

1. Seiten-Curtain-Airbagbaugruppe, die aufweist: ein aufblasbares Kissen (102) mit einer Vielzahl von aufblasbaren Abschnitten (102A-G) in einem vorgegebenen Muster; einen elastischen Balg (106), der innerhalb des aufblasbaren Kissens (102) angeordnet ist; eine Gaseintrittsleitung (104), die an einer Düse (154) angebracht ist, die einen Teil einer Gasgeneratorsammelleitung (155) bildet, wobei die Gaseintrittsleitung (104) ausgebildet ist, um Gas in den Balg (106) zu leiten, wobei der Balg ausgebildet ist, um das Gas zu den aufblasbaren Abschnitten (102A-G) des aufblasbaren Kissens (102) umzuleiten, einzuführen und zu verteilen, wobei der Balg (106) mit einer Vielzahl von Entlüftungsöffnungen (138, 140, 142, 143, 144) versehen ist, die positioniert sind, um das Gas vom Balg zu den aufblasbaren Abschnitten (102A-G) des aufblasbaren Kissens (102) zu übertragen, um die aufblasbaren Abschnitte des aufblasbaren Kissens in einer vorgegebenen Weise aufzublasen;
**dadurch gekennzeichnet, dass** der Balg (106) ein Paar sich verjüngende Abschnitte (106A, 106B) aufweist, zwischen denen die Düse (154) und die Gaseintrittsleitung (104) angeordnet sind, wobei sich die sich verjüngenden Abschnitte in entgegengesetzten Richtungen von und quer zur Düse (154) und der Gaseintrittsleitung (104) erstrecken, wobei ein jeder der sich verjüngenden Abschnitte (106A, 106B) einen relativ breiten Teil (134), der in der Nähe der Düse (154) und der Gaseintrittsleitung (104) angeordnet ist, und einen schmaleren Teil (136) entfernt von der Düse (154) und der Gaseintrittsleitung (104) aufweist, wobei die Gaseintrittsleitung (104) ein elastischer Schlauch ist, wobei die Düse innerhalb eines Hohlraumes des Schlauches angeordnet ist, und wobei Abschnitte (160, 162) des Schlauches oder ein Element (184), das am Schlauch angebracht ist, eine Querleitung (159, 170, 180) bilden, die an einem Austrittsende der Gaseintrittsleitung (104) für das Umlenken des Gases von einer Gaseintrittsleitung in entgegengesetzten Richtungen in die sich verjüngenden Abschnitte (106A, 106B) des Balges (106) angeordnet ist.

2. Seiten-Curtain-Airbagbaugruppe nach Anspruch 1, bei der der Balg (106) einschließt; eine Reaktionsfläche (146) für das Umlenken des Gases von der Gaseintrittsleitung (104) in entgegengesetzten Richtungen in den Balg (106).

3. Seiten-Curtain-Airbagbaugruppe nach Anspruch 2, bei der die Reaktionsfläche (146) und die sich verjüngenden Abschnitte (106A, 106B) des Balges (106) eine gemeinsame Faltlinie (150) aufweisen.

4. Seiten-Curtain-Airbagbaugruppe nach Anspruch 3, bei der eine Wärmeabschirmung (152) im Balg (106) vorhanden ist, wobei die Wärmeabschirmung ebenfalls die gemeinsame Faltlinie (150) aufweist.

## Revendications

1. Assemblage de coussin d'air latéral de type rideau, comportant un coussin gonflable (102) avec plusieurs sections gonflables (102A-G) dans un motif prédéterminé ; une vessie flexible (106) agencée dans le coussin gonflable (102) ; un conduit d'admission du gaz (104) fixé sur une buse (154) faisant partie d'un collecteur de générateur de gaz (155), le conduit d'admission du gaz (104) étant configuré de sorte à diriger le gaz dans la vessie (106), la vessie étant configurée de sorte à rediriger, diffuser et distribuer le gaz vers les sections gonflables (102A-G) du coussin gonflable (102), la vessie (106) comportant plusieurs évents (138, 140, 142, 143, 144) positionnés de sorte à transférer le gaz de la vessie vers les sections gonflables (102A-G) du coussin gonflable (102), pour gonfler les sections gonflables du coussin gonflable d'une manière prédéterminée ;
**caractérisé en ce que** la vessie (106) comporte une paire de sections effilées (106A, 106B), la buse (154) et le conduit d'admission du gaz (104) étant agencés entre elles, les sections effilées s'étendant dans des directions opposés à la buse (154) et au conduit d'admission du gaz (104) et de manière transversale à ceux-ci, chacune des sections effilées (106A, 106B) comportant une partie relativement large (134) agencée près de la buse (154) et du conduit d'admission du gaz (104), et une partie plus étroite (154), éloignée de la buse (154) et du conduit d'admission du gaz (104), le conduit d'admission du gaz (104) étant constitué par un tuyau flexible, la buse étant agencée à l'intérieur d'une lumière du tuyau, des sections (160, 162) du tuyau ou un élément (184) fixé sur le tuyau formant un conduit transversal (159, 170, 180) agencé au niveau d'une extrémité de sortie du conduit d'admission du gaz (104) pour rediriger le gaz du conduit d'admission du gaz dans des directions opposées dans les sections effilées (106A, 106B) de la vessie (106).

2. Assemblage de coussin d'air latéral de type rideau selon la revendication 1, dans lequel la vessie (196) englobe : une surface de réaction (146) pour diriger le gaz du conduit d'admission du gaz (104) dans des directions opposées dans la vessie (106).

3. Assemblage de coussin d'air latéral de type rideau selon la revendication 2, dans lequel la surface de réaction (146) et les sections effilées (106A, 106B) de la vessie (106) ont une ligne de pliage commune (150).

4. Assemblage de coussin d'air latéral de type rideau selon la revendication 3, dans lequel un écran thermique (152) est agencé dans la vessie (106), l'écran thermique ayant également une ligne de pliage commune (150).
